(19) Europäisches Patentamt
European Patent Office
Office européen des brevets

(11) **EP 4 175 084 A1**

(12) **EUROPEAN PATENT APPLICATION**

(43) Date of publication:
**03.05.2023 Bulletin 2023/18**

(21) Application number: **21306531.1**

(22) Date of filing: **29.10.2021**

(51) International Patent Classification (IPC):
***H02G 1/14*** *(2006.01)*

(52) Cooperative Patent Classification (CPC):
**H02G 1/14; H01R 43/28;** H02G 1/1224;
H02G 1/1265

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nexans**
**92400 Courbevoie (FR)**

(72) Inventors:
• **FRISK, Nils-Bertil**
**45297 Stromstad (SE)**

• **DOEDENS, Espen**
**1788 Halden (NO)**
• **PETTERSEN, Heine**
**92400 Courbevoie (FR)**
• **JOHANSEN, Tormod Foss**
**92400 Courbevoie (FR)**

(74) Representative: **Ipsilon**
**Le Centralis**
**63, avenue du Général Leclerc**
**92340 Bourg-la-Reine (FR)**

(54) **METHOD TO MINIMIZE ROUGHNESS ON CABLE END INSULATION SURFACES**

(57)      A method for preparing an uncovered insulation layer surface of an end section of a cable, the uncovered insulation layer surface having an advantageous low roughness, a method for jointing two cables, a method for preparing a termination assembly on a cable, a cable end, a joint and a termination assembly.

Fig. 2

**EP 4 175 084 A1**

**Description**

**Field of the invention**

The present invention relates to methods of minimizing the roughness of cable surfaces, in particular the roughness of insulation surfaces.

**Background**

High voltage cables usually comprise an electric conductor and an insulation system surrounding the electric conductor, the insulation system comprising an inner semiconducting layer, an insulating layer and an outer semiconducting layer. High voltage can be applied with alternating current (HVAC) or direct current (HVDC).

The quality of cable transitions, such as cable termination assemblies and joints between two HV cables is dependent on the quality of the surface at the interface between the cable and the joint, that is to say the surface of the insulation material. For these transitions, a rough insulation surface has been proven to be detrimental, in that, rough surfaces tend to give rise to low DC breakdown strength and thus poor performance. For AC the same rough surfaces have proved to feature similar strong field enhancement and roughness is thus detrimental for both HVAC and HVDC applications.

This is especially true for cable joints made with pre-molded joints, for example with pre-molded joints of US6916193B2.

As such preparation of the cable ends having an insulation layer surface with low roughness before jointing is important.

Current techniques for preparing the insulation layer of a cable end prior to jointing or preparing a termination assembly include removing the semiconducting layer with a designated tool, sanding, glassing, etc. Typical examples of peeling and stripping tools are the CP series from Hivotec and the AMSI from Alroc.

However, these methods do not provide the low level of roughness that is desirable in joints and termination assemblies.

The object of the present invention is to provide an improved method for obtaining an insulation layer surface wherein the surface roughness is minimized and improved.

**Summary of the invention**

The present invention is defined by the appended claims and in the following:

In a first aspect, the invention relates to a method for preparing an uncovered insulation layer surface of an end section of a cable, wherein the cable comprises an electric conductor and an insulation system surrounding the electric conductor, the insulation system comprising an inner semiconducting layer, an insulating layer and an outer semiconducting layer, the method comprising the steps of:

> a. providing a cutting tool having a blade comprising a cutting edge and a side surface, the side surface extends from the cutting edge and is arranged to face the cable during use, i.e. will face the cable featuring the cable end. The side surface may extend from the whole length of the cutting edge. The side surface is arranged to face the cable during use of the cutting tool. The side surface may be in contact with the insulating layer during cutting. Due to the contact between the insulation layer and the side surface during cutting, the side surface may burnish the obtained outer surface of the insulating layer during cutting
>
> b. preparing the cutting tool by polishing at least the edge and the side surface.

In an embodiment, the surface roughness of at least one of the edge and the side surface may be measured using optical profilometry, and $Sdq_c$ and or $Sa_c$ values for these surface and edge are derived.

The skilled person will understand that these measurements have to be realised on a representative sample of the surface.

The obtained $Sdq_c$ and/or $Sa_c$ values may be compared to preselected reference values $Sdq_{refc}$ and $Sa_{refc}$

- if $Sdq_c < Sdq_{refc}$ or $Sa_c < Sa_{refc}$, then the surface and edge have a satisfying surface quality and the blade of the cutting tool may be further used for the next step,

- if $Sdq_c > Sdq_{refc}$ and/or $Sa_c > Sa_{refc}$, then the surface and edge do not have a satisfying quality and the blade of the cutting tool may be polished again.

The reference values $Sdq_{refc}$ and Saref are selected to be the threshold values of an acceptable (or suitable) surface roughness. The skilled person will understand that these values are application dependent.

The skilled person will understand that a roughness defining parameter is any mathematical algorithm or equation that derives from the measured surface coordinates, yielding a scalar value or curve that can be used in a comparison against a reference value as an acceptance criteria. For example, amplitude parameters such as Sa, Sq, Ssk, Sku, Sp, Sv, Sz, hybrid parameters such as Sdq, Sdr, Sds, Ssc, other parameters listed in ISO 25178-2, Abott-Firestone curves, histograms, calculation of Field Enhancement Factors. In addition, if we here refer to Sa and Sdq as specific example of parameters to qualify the surface roughness, any data derived from the surface height distribution used as a pass or fail parameter may be used.

In an embodiment $Sdq_{refc}$ may be 0.4. In another embodiment $Sdq_{refc}$ may be 0.2. In another embodiment $Sdq_{refc}$ may be 0.1. In another embodiment $Sdq_{refc}$ may be 0.04. In another embodiment $Sdq_{refc}$ may be 0.02. In another embodiment $Sdq_{refc}$ may be 0.01.

In an embodiment $Sa_{refc}$ may be 800 nm. In another embodiment $Sa_{refc}$ may be 600 nm. In another embodiment $Sa_{refc}$ may be 400 nm. In another embodiment $Sa_{refc}$ may be 200 nm. In another embodiment $Sa_{refc}$ may be 80 nm. In another embodiment $Sa_{refc}$ may be 40 nm. In another embodiment $Sa_{refc}$ may be 20 nm. In another embodiment $Sa_{refc}$ may be 10 nm.

The method according to the first aspect of the invention further comprises the step of:

c. Using the prepared cutting tool to remove the outer semiconducting layer and optionally part of the insulation layer, from an end section of the cable, providing an uncovered insulation layer surface on the end section of the cable.

This may be achieved by rotating the edge of the cutting tool around the cable at a set distance to the center of the cable in order to remove a certain width of the outer surfaces. That is, the outer semiconducting layer and optionally a part of the insulation layer is removed from an end section of the cable.

In other words, the method provides a cable having an end section. At the end section, at least the outer semiconducting layer is removed such that the uncovered outer surface of the cable end section is provided by the insulating layer.

This method is especially useful in preparing a cable end section before jointing or before assembling a termination assembly on it. To ensure that no outer semiconducting layer is present on the cable, it is common to also remove part of the insulating layer.

In one embodiment of the inventive method, the outer semiconducting layer and 1% to 10% of the insulation layer, measured in thickness, i.e.radial thickness may be removed in step c. In another embodiment of the inventive method, the outer semiconducting layer and 10% to 90% of the insulation layer may be removed in step c. In another embodiment of the inventive method, the outer semiconducting layer and 30% to 70% of the insulation layer may be removed in step c. In another embodiment of the inventive method, the outer semiconducting layer and 10% to 50% of the insulation layer may be removed in step c.

In another embodiment of the inventive method, the outer semiconducting layer and 1-2mm of the insulation layer may be removed in step c.

In another embodiment of the inventive method, the method may further comprise the following step, prior to and/or during step c):

d. cooling at least the outer semiconductive layer, to or below the glass transition temperature of the outer semiconductive layer.

In another embodiment, at least the outer semiconductive layer may be cooled to between the glass transition temperature of the outer semiconductive layer and 10, 20, 30 or 40°C below the glass transition temperature of the outer semiconductive layer.

In another embodiment of the inventive method, the method may further comprise the following step, prior to and/or during step c):

d. cooling at least the outer semiconductive layer and the insulating layer, to or below the glass transition temperature of the insulating layer.

In another embodiment, at least the outer semiconductive layer and the insulating layer may be cooled to between the glass transition temperature of the insulating layer and 10, 20, 30 or 40°C below the glass transition temperature of the insulating layer.

In another embodiment, the outer surface of the cable, i.e. to the outer semiconductive layer and/or insulating layer may be cooled to between 0°C and -50°C.

In another embodiment, the outer surface of the cable, i.e. to the outer semiconductive layer and/or insulating layer may be cooled to between -10°C and -50°C.

In another embodiment, the outer surface of the cable, i.e. to the outer semiconductive layer and/or insulating layer may be cooled to between -20°C and -40°C.

In another embodiment of the inventive method, the method may further comprise the following step after step c)

e. applying heat to the uncovered insulation layer surface to locally heat said surface to at least the melting temperature of the insulation layer,

The skilled person will understand that this heating is applied so as to reduce the roughness of the uncovered insulation surface, but not so that said uncovered insulation surface will start to deform at the macroscopic scale or burn.

In an embodiment, the uncovered insulation surface obtained in step c) may be heated to or over the melting temperature of the insulating layer.

In another embodiment, the uncovered insulation surface obtained in step c) may be heated to between the melting temperature of the insulating layer and 20°C over the melting temperature of the insulation layer.

In another embodiment, the uncovered insulation surface obtained in step c) may be heated to between 110°C and 300°C.

In another embodiment, the uncovered insulation surface obtained in step c) may be heated to between 110°C and 220°C.

In another embodiment, the uncovered insulation surface obtained in step c) may be heated to between 120°C and 200°C.

In another embodiment, the uncovered insulation surface obtained in step c) may be heated to between 120°C and 140°C.

In another embodiment, the uncovered insulation surface obtained in step c) may be heated to between 180°C and 200°C.

In another embodiment of the inventive method, the method may further comprise the following step of

f. measuring the surface roughness of the obtained uncovered insulation layer surface and deriving Sdq and or Sa values for the uncovered insulation layer surface;

comparing the obtained Sdq and/or Sa values to preselected reference values $Sdq_{ref}$ and Saref

- if $Sdq < Sdq_{ref}$ or Sa < Saref, then the uncovered insulation layer surface 125;225 has a suitable (or acceptable) surface quality to be transitionned,
- if $Sdq > Sdq_{ref}$ and/or Sa > Saref, then the uncovered insulation layer surface 125;225 does not have a satisfying surface quality and steps a to c and optionally d; and optionally steps e, f, and g may be repeated.

The reference values $Sdq_{ref}$ and $Sa_{ref}$ are selected to be the threshold values of an acceptable (or suitable) surface roughness. The skilled person will understand that these values are application dependant.

The skilled person will understand that these measurements have to be realised on a representative sample of the surface.

The skilled person will understand that a roughness defining parameter is any mathematical algorithm or equation that derives from the measured surface coordinates, yielding a scalar value or curve that can be used in a comparison against a reference value as an acceptance criteria. For example, amplitude parameters such as Sa, Sq, Ssk, Sku, Sp, Sv, Sz, hybrid parameters such as Sdq, Sdr, Sds, Ssc, other parameters listed in ISO 25178-2, Abott-Firestone curves, histograms, calculation of Field Enhancement Factors. In addition, if we here refer to Sa and Sdq as specific example of parameters to qualify the surface roughness, any data derived from the surface height distribution used as a pass or fail parameter may be used.

In an embodiment Sdqref may be equal to 0.4. In another embodiment Sdqref may be 0.2. In another embodiment $Sdq_{ref}$ may be 0.1. In another embodiment $Sdq_{ref}$ may be 0.04. In another embodiment $Sdq_{ref}$ may be 0.02. In another embodiment $Sdq_{ref}$ may be 0.01.

In an embodiment Saref may be 800 nm. In another embodiment Saref may be 600 nm. In another embodiment Saref may be 400 nm. In another embodiment Saref may be 200 nm. In another embodiment Saref may be 80 nm. In another embodiment Saref may be 40 nm. In another embodiment Saref may be 20 nm. In another embodiment Saref may be 10 nm

In a second aspect, the invention relates to a method of jointing a first cable and a second cable, the first cable and the second cable comprising an electric conductor and an insulation system surrounding the electric conductor, the insulation system comprising an inner semiconducting layer, an insulating layer and an outer semiconducting layer, the method comprising the steps of:

i. preparing an uncovered insulation layer surface at a cable end for at least one of the first and the second cables, according to the first aspect of the invention;
ii. jointing the cable end sections.

In an embodiment of the second aspect of the invention the uncovered insulation layer surface may be prepared at a cable end for both the first and the second cables.

In an embodiment of the second aspect of the invention, the jointing step may be realised using a pre-molded joint.

In a third aspect, the invention relates to a method for preparing a termination assembly on a cable, the cable comprising an electric conductor and an insulation system surrounding the electric conductor, the insulation system comprising an inner semiconducting layer, an insulating layer and an outer semiconducting layer, the method comprising the steps of:

I. preparing an uncovered insulation layer surface at a cable end, according to the method according to the first aspect of the invention;

II. mounting a termination assembly on the uncovered insulation layer surface.

In an embodiment of the third aspect of the invention, the mounting a termination assembly step is realised using a pre-molded termination assembly.

In a fourth aspect, the invention relates to a cable, comprising a cable end, obtainable by the method according to the first aspect of the invention.

In a fifth aspect, the invention relates to a joint between a first and a second cable, obtainable by the method according to the second aspect of the invention.

In a sixth aspect, the invention relates to a termination assembly on a cable, obtainable by the method according to the third aspect of the invention.

## Short description of the drawings

In the following description this invention will be further explained by way of exemplary embodiments shown in the drawings:

Fig. 1 is a perspective view of a typical cable structure.

Fig. 2 is a side view of the cutting tool and the cable.

Fig. 3 is a perspective view of the removal of the outer semiconducting layer of a cable end.

Fig. 4 is a side view of a cable end in a joint or termination assembly.

## Detailed description of the invention

The quality of cable transitions, such as cable termination assemblies and joints between two HV cables is dependent on the quality of the surface at the interface between the cable and the joint, that is to say the surface of the insulation material. For these transitions, a rough insulation surface has been proven to be detrimental, in that, rough surfaces tend to give rise to low DC breakdown strength and thus poor performance. For AC the same rough surfaces have proved to feature similar strong field enhancement and roughness is thus detrimental for both HVAC and HVDC applications.

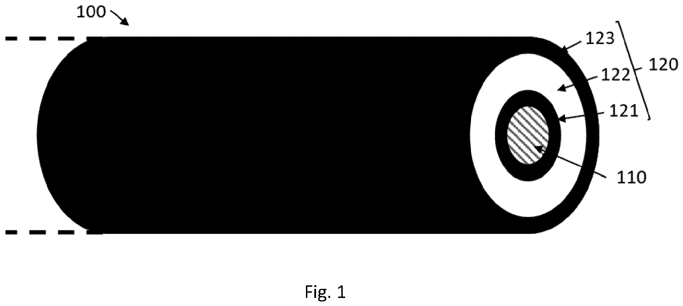

In the preparation of a cable transition, that is to say the transition from a cable end to another element, such as in cable termination assemblies and joints, a first electric cable 100 is provided, the first cable 100 comprising an electric conductor 110 and an insulation system 120 surrounding the electric conductor 110, the insulation system 120 comprising an inner semiconducting layer 121, an insulating layer 122 and an outer semiconducting layer 123. Other layers, such as sheathing, water barriers may also be present on the cable. This cable is illustrated in figure 1.

The end section of the cable 100 may be prepared for having termination assembly mounted over it or to be jointed to a second electric cable 200. The second cable 200 comprising an electric conductor 210 and an insulation system 220 surrounding the electric conductor 210, the insulation system 220 comprising an inner semiconducting layer 221, an insulating layer 222 and an outer semiconducting layer 223. Other layers, such as sheathing, water barriers may also be present on the second cable 200.

The outer layers down to but not including the outer semiconducting layer 123, 223 are removed according to known techniques. This is done on a length of cable that is suitable for jointing, known to the skilled person.

The inventive method of preparing a cable end comprises the steps of:

a) providing a cutting tool, having a blade comprising a cutting edge and a side surface, the side surface starting from the cutting edge that is intended to be facing the cable during use, here the removal of the outer layers of the cable (and not the parts of the cable being removed), thereafter called the contact surface.

b) preparing the cutting tool 400

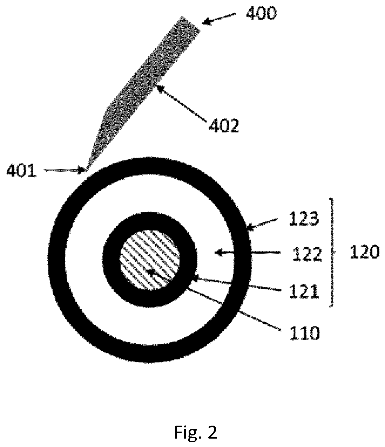

The cutting tool 400 comprises a blade and may be any cutting tool known to the skilled person. Rotary stripping tools are a typical example of such a tool. Cutting tools 400 comprising a blade at least partially made of steel, tungsten, or ceramic may be advantageous because they are well suited for being polished. Steel blades are preferred. The blade of the cutting tool 400 comprises an edge 401 and a side surface 402, starting from the cutting edge that is intended to be facing the cable during removal of the outer layers of the cable (and not the parts of the cable being removed), thereafter called the contact surface 402, as illustrated in figure 2.
The cutting tool 400 is prepared by polishing at least the cutting edge 401 and the contact surface 402 of the cutting tool.

Any polishing technique known in the art may be used here. These polishing techniques include both chemical and mechanical treatment such as chemical coating, etching, laser sharpening.
Surface roughness is measured thanks to any known method. Typical measurements are made with a profilometer. These can be of the contact variety (typically a diamond stylus) or optical (e.g.: a white light interferometer or laser scanning confocal microscope).

In an exemplary embodiment the blade of the cutting tool 400 is prepared by polishing. The roughness of the edge 401 and of the contact surface 402 of the cutting tool 400 are measured using known methods, and deriving $Sdq_c$ and or $Sa_c$ values for the edge and of the contact surface:

- if $Sdq_c < Sdq_{refc}$ or $Sa_c < Sa_{refc}$, then the surfaces have a satisfying quality and the blade of the cutting tool 400 may be further used for the next step,
- if $Sdq_c > Sdq_{refc}$ and/or $Sa_c > Sa_{refc}$, then the surfaces do not have a satisfying surface quality and the blade of the cutting tool 400 may be polished again.

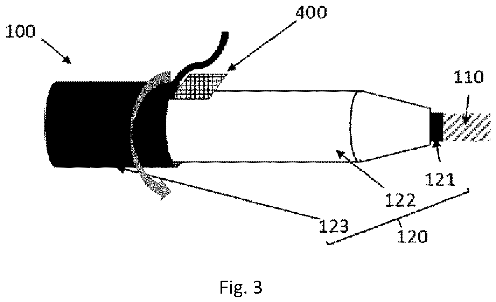

In an example of the invention $Sdq_{refc} = 0.4$.
In an example of the invention $Sa_{refc} = 800$ nm.
After being prepared the cutting tool is used in a step c) to remove the outer semiconducting layer and optionally some of the insulation layer on the cable.
Step c is illustrated in figure 3 and yield an uncovered insulation layer surface 125;225.
Steps a-c, by themselves, are sufficient to improve the quality of the surface of the insulation layer.
In addition, one or more of the following steps may be undertaken to further reduce the roughness of the surface of the insulation layer.
d) prior to and/or during step c), the outer layers of the cable, i.e. the outer semiconductive layer 123,223 and/or insulating layer 122,222, may be cooled to or below the glass transition temperature of the outer semiconductive layer 123,223 and optionally to or below the glass transition temperature of the insulating layer 122,222 (if it is below the glass transition temperature of the outer semiconductive layer 123,223),
[0061] The cooling may for example be realized by using dry-ice or an electrical cooling blanket. The cooling temperature is often between -10°C to -50°C.
The cooling step will help stiffen the outer surfaces to be removed 122,123,222,223, which will result in a lower roughness on the surface obtained in step c).
e) heating the surface obtained in step c) to locally heat said surface at least to the melting temperature of the insulation layer,
[0063] By applying heat to the surface obtained in step c), the polymer at the surface will reach their melting temperature and existing irregularities will be further lessened on the uncovered insulation layer surface 125;225 obtained in step c). Heating may be applied using a hot air flow such as with a heat gun.
f) measuring the surface roughness of the uncovered insulation layer surface 125;225 using known methods, and deriving Sdq and or Sa values for the uncovered insulation layer surface 125;225

- if $Sdq < Sdq_{ref}$ or $Sa < Saref$, then the uncovered insulation layer surface 125;225 has a satisfying surface quality and the cable transition may be further prepared,
- if $Sdq > Sdq_{ref}$ and/or $Sa > Saref$, then the uncovered insulation layer surface 125;225 does not have a satisfying surface quality and steps a to c and optionally d; and optionally steps e, f, and g may be repeated.

**Surface texture parameters**

Features in the surface texture can be quantified using roughness parameters, which represent features in a certain measurement domain with a single parameter value, thus facilitating direct comparisons of certain surface types. The average roughness (or arithmetical mean height variation) of a certain 3D surface is quantified through Sa, expressed as:

$$Sa = \iint_a |Z(x,y)| dxdy$$

where Z(x,y) represents a matrix of 3D coordinates on the surface, with Z expressing the local distance from the mean plane in m. Another relevant parameter, the root mean square (RMS) roughness Sq, is expressed as:

$$Sq = \sqrt{\iint_a \left(Z(x,y)\right)^2 dxdy}$$

Sa and Sq parameters, in m, are useful for comparing the height in the surface texture. However, two surface types having identical Sa and Sq parameter values can have vastly different textures, as the texture's spacing can be present with different widths. Therefore, a third parameter, the unitless RMS surface slope Sdq, is introduced as:

$$Sdq = \sqrt{\frac{1}{A}\int_0^{Lx}\int_0^{Ly}\left(\frac{\partial Z(x,y)}{\partial x}\right)^2 + \left(\frac{\partial Z(x,y)}{\partial y}\right)^2 dxdy}$$

where A is the area of the measurement domain in $m^2$, *Lx* and *Ly* are respectively the x and y length of the investigated domain in m. The Sdq parameter thus quantifies the steepness in the surface texture (i.e. with Sdq = 0 for a fully flat surface and Sdq = 1 for all gradient components at 45° incline) and is sensitive to both the amplitude and spacing in the surface texture. By using both Sa and Sdq parameters in surface type comparisons, a texture sensitive analysis is made covering most surface types.

Surface roughness may be measured by any known method. Typical measurements are made with a profilometer. These can be of the contact variety (typically a diamond stylus) or optical (e.g.: a white light interferometer or laser scanning confocal microscope).

This optional step is preferably done in the field, and preferably without damaging (i.e. taking a sample of) the surface obtained in step c) or e).

Portable optical profilometry as described in the co-pending application with title "optical profilometry on HV-cable ends and on samples extracted form HV-cables" is a highly advantageous method for measuring the surface roughness.

The cable end may then be transitioned, e.g. jointed to another cable end or termination, using known methods. The method of preparing a cable end is particularly relevant for transitions involving a physical interface, in particular for method using a pre-molded transition element 300, such as a pre-molded joint or a pre-molded termination assembly. The pre-molded transition element 300 typically comprises an electric transition element to connect the electric conductor 110;210 to a further conductor element and an insulation system surrounding the electric transition element 310, the insulation system comprising an inner semiconducting layer 321, an insulating layer 322 and an outer semiconducting layer 323.

In a joint, the electric transition element may for example be a ferrule or any other suitable element known in the art.

The skilled person will understand here that a physical interface here refers to an interface between to solid surfaces, for example between a surface of a cable end and a pre-molded joint, whereas a chemical interface refers to a interface between a surface of a cable end and a non-solid surface, for example a melted insulation layer extruded on top of the cable end. Here the physical interface is the interface between the uncovered insulation layer surface 125;225 of the cable 100;200 and the inner surface of the insulating layer 321 of the transition element 300.

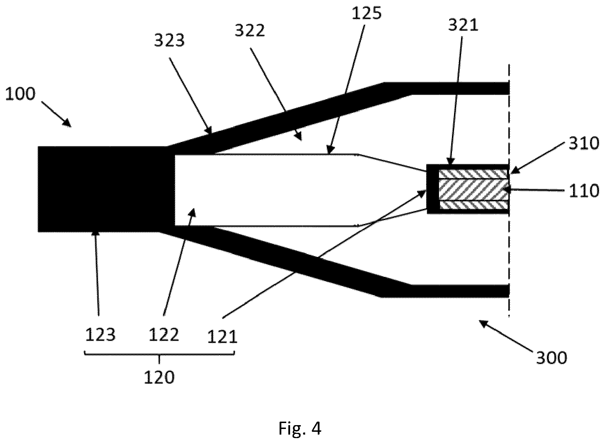

The obtained physical interface, between a cable end and a pre-molded joint or a pre-molded termination assembly is illustrated in figure 4.

**Examples**

A uncovered insulation layer surface (125, 225) of an end section of a cable (100, 200), was prepared using different methods, on at least 3 cables in each case. The surface roughness of the obtained insulation layer was measured in each case using an optical profilometry. Sa and Sdq were derived from these measurements.

A first series of cable ends on different cables was prepared first roughly cutting away the outer semicon using a peeling tool, followed by stepwise abrasion starting from rougher (lower) down to finer (higher) grit sizes, up to a final step using P600. Measurements on the first series of cables yielded the following results:

$$Sa = 1010 \pm 369 \text{nm}$$

$$Sdq = 0.46 \pm 0.3 \; .$$

In a first example, a series of cable ends on different cables was prepared with the inventive method comprising the steps of:

a) providing a steel cutting tool 400 comprising a blade having a cutting edge 401 and a contact surface 402; and
b) preparing the cutting tool by polishing both the edge 401 and the contact surface 402 that will face the cable during use;
c) using the prepared cutting tool 400 to remove the outer semiconducting layer 123;223 and some of the insulation layer 121;221 on the cable 100;200.
d) the surface roughness of the obtained insulation layer is measured using a portable optical profilometer, such as the Jr25 from Nanovea, and both Sdq and Sa values are derived for the insulation layer.

This second series of cables yielded the following results:

$$Sa = 423 \pm 126nm$$

$$Sdq = 0.18 \pm 0.04 \; .$$

In a second example, a series of cable end on different cables was prepared with the inventive method comprising the steps of:

a) providing a steel cutting tool 400 comprising a blade having a cutting edge 401 and a contact surface 402; and
b) preparing the cutting tool by polishing both the edge 401 and the contact surface 402 that will face the cable during use;
c) using the prepared cutting tool 400 to remove the outer semiconducting layer 123;223 and some of the insulation layer 121;221 on the cable 100;200.
d) heating the obtained insulating layer to heat the surface above 120°C, such that at least parts of the surface reach the melting temperature of the insulating layer, i.e. the melting temperature of the material of the insulating layer,
e) the surface roughness of the obtained insulation layer is measured using a portable optical profilometer, and both Sdq and Sa values are derived for the insulation layer.

This third series of cables yielded the following results:

$$Sa = 120 \pm 23 \; nm$$

$$Sdq = 0.14 \pm 0.03 \; .$$

**Claims**

1. A method for preparing an uncovered insulation layer surface (125, 225) of an end section of a cable (100, 200), wherein the cable (100, 200) comprises an electric conductor (110, 210) and an insulation system (120, 220) surrounding the electric conductor (110, 210), the insulation system (120, 220) comprising an inner semiconducting layer (121, 221), an insulating layer (122, 222) and an outer semiconducting layer (123, 223), the method comprising the steps of:

a. providing a cutting tool (400) having a blade comprising a cutting edge (401) and a side surface (402), the side surface (402) extends from the cutting edge (401) and is arranged to face the cable (100, 200) during use,
b. preparing the cutting tool (400) by polishing at least the edge (401) and the side surface (402),
c. using the prepared cutting tool (400) to remove the outer semiconducting layer (123, 223) and optionally part of the insulation layer (122, 222), from an end section of the cable (100, 200), providing an uncovered insulation layer surface (125, 225) on the end section of the cable.

2. A method according to claim 1, further comprising the following step, prior to and/or during step c):
   d. cooling at least the outer semiconductive layer (123,223), to or below the glass transition temperature of the outer semiconductive layer.

3. A method according to claim 1, further comprising the following step, prior to and/or during step c):
   e. cooling at least the outer semiconductive layer (123,223) and the insulating layer (122,222), to or below the glass transition temperature of the insulating layer (122,222).

4. A method according to anyone of the previous claims comprising the following step after step c)
   f. applying heat to the uncovered insulation layer surface (125,225) to locally heat said surface to at least the melting temperature of the insulation layer.

5. A method according to anyone of the previous claims, further comprising the steps of:
   g. measuring the surface roughness of the obtained uncovered insulation layer surface (125,225) and deriving Sdq and or Sa values for the uncovered insulation layer surface (125,225); and
   comparing the obtained Sdq and/or Sa values to preselected reference values $Sdq_{ref}$ and Saref

   - if $Sdq < Sdq_{ref}$ or $Sa < Saref$, then the uncovered insulation layer surface (125,225) has an acceptable surface quality for transition,
   - if $Sdq > Sdq_{ref}$ and/or $Sa > Saref$, then the uncovered insulation layer surface (125,225) does not have an acceptable surface quality and steps a) to c) and optionally d); and optionally steps e), f), and g) may be repeated.

6. A method according to anyone of the previous claims, wherein $Sdq_{ref} = 0.4$.

7. A method according to anyone of the previous claims, wherein $Sa_{ref} = 800$ nm.

8. A method of jointing a first cable (100) and a second cable (200), the first cable (100) and the second cable (200) comprising an electric conductor (110, 210) and an insulation system (120, 220) surrounding the electric conductor (110, 210), the insulation system (120, 220) comprising an inner semiconducting layer (121, 221), an insulating layer (122,222) and an outer semiconducting layer (123,223), the method comprising the steps of:

   i. preparing an uncovered insulation layer surface (125,225) at an end section of at least one of the first cable (100) and the second cable (200), by using the method according to anyone of the previous claims;
   ii. jointing the end sections of the first cable (100) and the second cable (200).

9. A method of jointing a first cable (100) and a second cable (200), according to claim 8 wherein an uncovered insulation layer surface (125, 225) is prepared at an end section of both the first and the second cable (100, 200).

10. A method of jointing a first cable (100) and a second cable (200), according to claim 8 or 9, wherein the jointing step is realised using a pre-molded joint.

11. A method for preparing a termination assembly on a cable (100, 200), the cable comprising an electric conductor (110, 210) and an insulation system (120, 220) surrounding the electric conductor (110, 210), the insulation system (120, 220) comprising an inner semiconducting layer (121, 221), an insulating layer (122,222) and an outer semiconducting layer (123,223), the method comprising the steps of:

    I. preparing an uncovered insulation layer surface (125,225) at an end section of the cable, by use of the method according to anyone of claims 1-7;
    II. mounting a termination assembly on the uncovered insulation layer surface (125,225).

12. A method for preparing a termination assembly on a cable (100, 200), according to claim 11, wherein the termination assembly is a pre-molded termination assembly.

13. A cable (100, 200), comprising an end section, obtainable by the method according to anyone of claims 1 to 7.

14. A joint between a first and a second cable (100, 200) obtainable by the method according to anyone of claims 8 to 10.

15. A termination assembly on a cable (100, 200) obtainable by the method according to anyone of claims 11 and 12.

Fig. 1

Fig. 2

Fig. 3

Fig. 4

Europäisches
Patentamt

European
Patent Office

Office européen
des brevets

# EUROPEAN SEARCH REPORT

Application Number

EP 21 30 6531

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 903 639 B2 (PRYSMIAN SPA [IT]) 26 January 2021 (2021-01-26) | 12-14 | INV. H02G1/14 |
| Y | * figures 1,5 * | 1,5-11 | |
| A | * column 5, line 1 - column 6, line 14 * * column 6, line 45 - line 61 * | 2-4 | |
| X | CA 995 314 A (BRITISH INSULATED CALLENDERS) 17 August 1976 (1976-08-17) | 13-15 | |
| Y | * figure 1 * * page 5, line 23 - page 7, line 21 * | 11 | |
| Y | ZENG W ET AL: "Surface characterisation-based tool wear monitoring in peripheral milling", THE INTERNATIONAL JOURNAL OF ADVANCED MANUFACTURING TECHNOLOGY, SPRINGER, LONDON, vol. 40, no. 3, 1 January 2009 (2009-01-01), pages 226-233, XP036200018, ISSN: 0268-3768, DOI: 10.1007/S00170-007-1352-X [retrieved on 2009-01-01] * page 226 - page 233 * | 1,5-10 | |
| A | DAS SUBHANKAR ET AL: "Cable joint installation time optimization", IEEE TRANSACTIONS ON DIELECTRICS AND ELECTRICAL INSULATION, IEEE SERVICE CENTER, PISCATAWAY, NJ, US, vol. 24, no. 6, 1 December 2017 (2017-12-01), pages 3959-3965, XP011679235, ISSN: 1070-9878, DOI: 10.1109/TDEI.2017.006776 [retrieved on 2018-03-13] * the whole document * | 1-15 | TECHNICAL FIELDS SEARCHED (IPC) H01R H02G |

The present search report has been drawn up for all claims

| Place of search | Date of completion of the search | Examiner |
|---|---|---|
| The Hague | 21 April 2022 | Braga, João |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6531

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2022

| Patent document cited in search report | | Publication date | Patent family member(s) | | Publication date |
|---|---|---|---|---|---|
| US 10903639 | B2 | 26-01-2021 | AU | 2016423482 A1 | 11-04-2019 |
| | | | BR | 112019005174 A2 | 11-06-2019 |
| | | | CA | 3037450 A1 | 22-03-2018 |
| | | | EP | 3516749 A1 | 31-07-2019 |
| | | | US | 2019237958 A1 | 01-08-2019 |
| | | | WO | 2018051171 A1 | 22-03-2018 |
| CA 995314 | A | 17-08-1976 | CA | 995314 A | 17-08-1976 |
| | | | GB | 1473499 A | 11-05-1977 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6916193 B2